# EUROPÄISCHE PATENTANMELDUNG

(11) **EP 4 109 702 A1**
(43) Veröffentlichungstag der Anmeldung: **28.12.2022**
(21) Anmeldenummer: 21181110.4
(22) Anmeldetag: 23.06.2021
(51) Int. Cl.: H02J 7/00, B25F 5/00

(54) **WERKZEUGMASCHINE MIT MINDESTENS ZWEI AKKUMULATOREN UND VERFAHREN ZUR DURCHFÜHRUNG EINES LADUNGSAUSGLEICHS ZWISCHEN DEN MINDESTENS ZWEI AKKUMULATOREN DER WERKZEUGMASCHINE**

(71) Anmelder: Hilti Aktiengesellschaft, 9494 Schaan (LI)
(72) Erfinder: Hurka, Florian, 86459 Margertshausen (DE); Musolino, Vincenzo, 9470 Buchs (CH); Wißmach, Walter, 80637 Muenchen (DE)
(74) Vertreter: Hilti Aktiengesellschaft Corporate Intellectual Property

(57) **Zusammenfassung**

Die Erfindung betrifft eine Werkzeugmaschine, die einen Motor mit mindestens einer Motorphase und mindestens einen ersten Akkumulator und einen zweiten Akkumulator umfasst. Ziel der Erfindung ist es, einen Ladungsausgleich zwischen den Akkumulatoren zu ermöglichen, wobei aus dem Stand der Technik bekannte Ausgleichsschaltungen in dem Sinne vereinfacht werden sollen, dass nur wenige zusätzliche Bauteile erforderlich sind. Das Ziel wird erfindungsgemäß erreicht durch die Vorsehung einer leitenden Verbindung zwischen den zwei Akkumulatoren und der mindestens einen Phase des Motors der Werkzeugmaschine, wobei die leitende Verbindung ein elektronisches Bauteil aufweist, bei dem es sich beispielsweise um einen Schalter oder um mindestens einen Gleichstrom-Gleichstrom-Wandler handeln kann. Der Schalter kann in einem Ausgleichs-Modus der Werkzeugmaschine geschlossen und in einem Betriebs-Modus der Werkzeugmaschine geöffnet werden. In einem zweiten Aspekt betrifft die Erfindung ein Verfahren zum Ladungsausgleich zwischen einem ersten Akkumulator und einem zwei Akkumulator in einer Werkzeugmaschine.

## Beschreibung

Die Erfindung betrifft eine Werkzeugmaschine, die einen Motor mit mindestens einer Motorphase und mindestens einen ersten Akkumulator und einen zweiten Akkumulator umfasst. Ziel der Erfindung ist es, einen Ladungsausgleich zwischen den Akkumulatoren zu ermöglichen, wobei aus dem Stand der Technik bekannte Ausgleichsschaltungen in dem Sinne vereinfacht werden sollen, dass nur wenige zusätzliche Bauteile erforderlich sind. Das Ziel wird erfindungsgemäß erreicht durch die Vorsehung einer leitenden Verbindung zwischen den zwei Akkumulatoren und der mindestens einen Phase des Motors der Werkzeugmaschine, wobei die leitende Verbindung ein elektronisches Bauteil aufweist, bei dem es sich beispielsweise um einen Schalter oder um mindestens einen Gleichstrom-Gleichstrom-Wandler handeln kann. Der Schalter kann in einem Ausgleichs-Modus der Werkzeugmaschine geschlossen und in einem Betriebs-Modus der Werkzeugmaschine geöffnet werden. In einem zweiten Aspekt betrifft die Erfindung ein Verfahren zum Ladungsausgleich zwischen einem ersten Akkumulator und einem zwei Akkumulator in einer Werkzeugmaschine.

### Hintergrund der Erfindung:

Im Stand der Technik sind Werkzeugmaschinen bekannt, mit denen unterschiedliche Arbeiten durchgeführt werden können. Beispielsweise sind Bohrhämmer, Meißelgeräte, Trenn- oder Winkelschleifer, Schraubgeräte oder Kembohrgeräte bekannt, bei denen jeweils ein Werkzeug durch einen Motor angetrieben wird. Eine Energieversorgung kann über einen Netzanschluss oder mit Batterien oder Akkumulatoren ("Akkus") bereitgestellt werden.

Es sind eine Reihe von Anwendungsfällen solcher Werkzeugmaschinen bekannt, bei denen hohe Leistungen erforderlich sind, um die entsprechenden Arbeiten durchzuführen. Bei Werkzeugmaschinen, deren Energieversorgung von einem Akkumulator gebildet wird, kann es vorkommen, dass die für die Arbeit erforderliche Leistung die maximal mögliche Abgabeleistung des Akkus übersteigt. Um dieser Herausforderung zu begegnen, werden solche Werkzeugmaschinen häufig mit einer Schnittstelle für zwei Akkumulatoren ausgestattet, um mit zwei Akkus, die in Reihe oder parallel geschaltet werden können, die gewünschte Leistung bereitstellen zu können.

Bei der Arbeit mit Werkzeuggeräten mit zwei Akkumulatoren kann aber folgendes Problem auftreten: Wenn einer der Akkus ganz oder teilweise entladen ist, kann für die Werkzeugmaschine nicht über den gesamten Arbeitszeitraum die volle Leistung erbracht werden. Sobald einer der Akkus vollständig entladen ist, kann keine weitere Leistung aus den Akkus entnommen werden. Die Arbeit mit der Werkzeugmaschine muss dann möglichweise - trotz vorhandener Restladung in einer der beiden Akkus - beendet werden.

Im Stand der Technik sind Verfahren bekannt, mit denen ein Ladungsausgleich zwischen elektrischen Komponenten in einer Werkzeugmaschine ermöglicht werden kann. Beispielsweise offenbart US 5 631 534 A eine Anordnung zur von elektronischen Bauteilen, um einen Ladungsausgleich zwischen Batterien, die in Reihe geschaltet sind, zu ermöglichen. Wenn ein solches Balancing-Verfahren auf Geräte- bzw. Akkumulator-Ebene realisiert werden soll, sind für eine solche Anordnung eine Vielzahl von Bauteilen erforderlich, beispielsweise verschiedene Schalter, Treiber, Induktivitäten und Strommessvorrichtungen. Solche Anordnung sind aufwändig in der Herstellung und fehleranfällig.

Aufgabe der vorliegenden Erfindung ist es daher, die vorstehend beschriebenen Mängel und Nachteile des Standes der Technik zu überwinden und eine verbesserte Werkzeugmaschine mit mindestens zwei Akkumulatoren sowie ein Verfahren zur Durchführung eines Ladungsausgleichs zwischen Akkumulatoren in einer Werkzeugmaschine bereitzustellen, bei denen eine entsprechende Anordnung von elektrischen Komponenten im Inneren der Werkzeugmaschine, mit der der Ladungsausgleich zwischen den Akkus ermöglicht wird, besonders robust und kostenoptimiert ausgestaltet werden kann. Dabei soll die Anordnung in dem Sinne einfach gestaltet sein, dass möglichst nur wenige Bauteile verwendet werden.

Die Aufgabe wird gelöst durch den Gegenstand der unabhängigen Ansprüche. Vorteilhafte Ausführungsformen des erfindungsgemäßen Gegenstands werden in den abhängigen Ansprüchen beschrieben.

### Beschreibung der Erfindung:

Die Aufgabe wird dabei in einem ersten Aspekt durch eine Werkzeugmaschine gelöst, die einen Motor mit mindestens einer Motorphase und einen mindestens ersten Akkumulator und einen zweiten Akkumulator umfasst. Die Werkzeugmaschine ist dadurch gekennzeichnet, dass zum Ladungsausgleich zwischen dem ersten Akkumulator und dem zwei Akkumulator eine leitende Verbindung zwischen den Akkumulatoren und der mindestens einen Phase des Motors der Werkzeugmaschine vorgesehen ist, wobei die leitende Verbindung ein zusätzliches elektronisches Bauteil aufweist. In einer sehr bevorzugten Ausgestaltung der Erfindung liegt in der elektrischen Verbindung ein Schalter vor, der in einem Ausgleichs-Modus der Werkzeugmaschine geschlossen und in einem Betriebs-Modus der Werkzeugmaschine geöffnet werden kann. Es stellt einen wesentlichen Vorteil der Erfindung dar, dass mit einer sehr geringen Anzahl zusätzlicher Bauteile, insbesondere dem Schalter und der leitenden Verbindung, eine verbesserte Motorbrücke zu Balancing-Zwecken eingesetzt werden kann. Es ist in dieser Ausgestaltung der Erfindung, bei der das elektronische Bauteil als Schalter ausgebildet ist, bevorzugt, dass die Akkumulatoren über einen Mittelabgriff miteinander verbunden vorliegen, wobei die leitende Verbindung zwischen dem Mittelabgriff und der mindestens einen Motorphase besteht. Es ist im Sinne der Erfindung bevorzugt, dass der Motor der vorgeschlagenen Werkzeugmaschine mehrere Motorphasen umfasst. Beispielsweise kann der Motor drei Motorphasen umfassen. Es kann im Sinne der Erfindung aber auch bevorzugt sein, dass der Motor ein einphasiger Motor mit einer Inverter-H-Brücke ist.

Um zu der Erfindung zu gelangen, wurde eine Motorinverterbrücke, wie sie aus dem Stand der Technik bekannt ist, dahingehend modifiziert, dass eine leitende Verbindung zwischen den Ackumulatoren und der mindestens einen Phase des Motors der Werkzeugmaschine vorgesehen ist, wobei die Verbindung vorzugsweise mit einem Schalter geöffnet ("Betriebs-Modus") oder geschlossen ("Ausgleichs- oder Balancing-Modus") werden kann. Die vorgeschlagene Werkzeugmaschine kann eine Reihe von Schaltern umfassen. Diese Schalter können bei bekannten Motorbrücken von Feldeffektransistoren (FETs) oder Bipolartransistoren mit isolierter Gate-Elektrode (IGBTs) gebildet werden, wobei über die Schalter an die Motorphasen ein unterschiedliches Potential angelegt werden kann. Der Potentialunterschied bewirkt, dass ein Strom durch die Motorphasen fließt, wodurch ein definiertes Moment entsteht. Um die Größe der fließenden Phasenströme zu ermitteln, können Shunt-Widerstände verwendet werden.

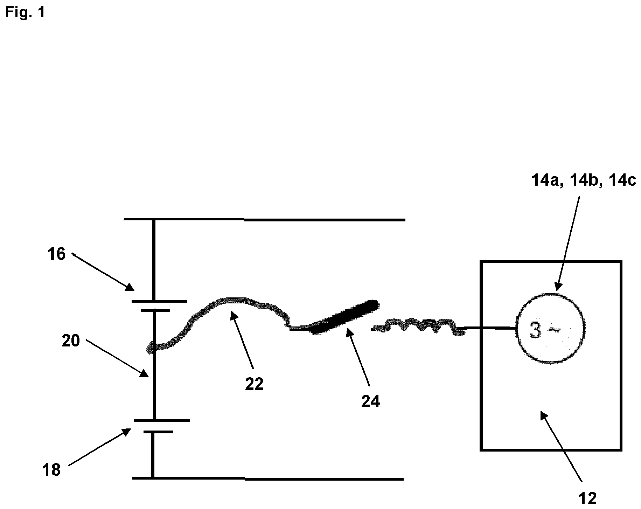

Von diesen bekannten Motorbrücken abweichend ist erfindungsgemäß eine Anbindung zwischen einer oder mehreren der Motorphasen und den Akkumulatoren vorgesehen. Ein wesentlicher Vorteil dieser modifizierten Motorbrücke besteht darin, dass der Motor der Werkzeugmaschine als Induktivität verwendet wird. Die modifizierte Motoransteuerung wird in Fig. 1 dargestellt. Insbesondere wird die Induktivität des Motors der Werkzeugmaschine als Teil einer DC-DC-Wandler-Induktivität eingesetzt. Es ist im Sinne der Erfindung bevorzugt, dass die leitende Verbindung zwischen den Akkumulatoren und mindestens einer Phase des Motors der Werkzeugmaschine unterbrochen wird, wenn die Werkzeugmaschine im normalen Motorbetrieb verwendet wird. Dazu umfasst die leitende Verbindung einen Schalter. Vorzugsweise findet der Ladungsausgleich somit insbesondere dann statt, wenn die Werkzeugmaschine stillsteht, d.h. wenn nicht mit ihr gearbeitet wird. Während des Betriebs der Werkzeugmaschine findet vorzugsweise kein Ladungsausgleich zwischen den Akkumulatoren der Werkzeugmaschine statt. Es ist im Sinne der Erfindung bevorzugt, dass der Motor der Werkzeugmaschine ein bürstenloser Motor ist. Der Motor kann beispielsweise drei Motorphasen aufweisen. Es sind aber auch andere Anzahlen von Motorphasen denkbar.

Es ist im Sinne der Erfindung bevorzugt, dass der erste Akkumulator einen ersten Ladestand aufweist und der zweite Akkumulator einen zweiten Ladestand aufweist, wobei die Ladestände mittels dem zuvor beschriebenen Ladungsausgleich über die offene leitende Verbindung ausgeglichen werden können, wenn die Werkzeugmaschine im Stillstand ist. Beispielsweise kann, wenn der erste Ladestand des ersten Akkus 75 % beträgt und der zweite Ladestand des zweiten Akkus 25 %, mit der Erfindung ein Ladungsausgleich mit dem Ziel durchgeführt werden, dass an dessen Ende beide Akkumulatoren einen Ladestand von etwa 50 % haben. Insbesondere ermöglicht ein so durchgeführter Ladungsausgleich, dass die Werkzeugmaschine länger effektiv genutzt werden kann, weil die Ladungen innerhalb der Akkumulatoren besser verteilt und so ausgenutzt werden können. Insbesondere wird die Situation vermieden, dass die Arbeit mit der Werkzeugmaschine beendet werden muss, obwohl einer der Akkumulatoren noch teilweise geladen ist. Wenn. der Schalter der Verbindung geschlossen ist, liegt die Werkzeugmaschine im Ausgleichs-Modus oder Balancing-Modus vor, in dem der Ladungsausgleich zwischen den mindestens zwei Akkumulatoren der Werkzeugmaschine stattfindet.

Es ist im Sinne der Erfindung bevorzugt, dass der Schalter innerhalb der elektrisch leitenden Verbindung ein bidirektional leitender und sperrender Schalter ist. Der Schalter kann beispielsweise als Triac ausgebildet sein. Dadurch kann eine besonders kostengünstige Werkzeugmaschine bereitgestellt werden. Vorzugsweise kann der Schalter im Ausgleichs-Modus durch eine Pulsweitenmodulation (PWM) in einem geschlossenen Zustand gehalten werden. Das bedeutet im Sinne der Erfindung bevorzugt, dass der Schalter durch schnelles Anpulsen im gezündeten Zustand gehalten werden kann. Diese Ausgestaltung ist besonders bevorzugt, wenn der Schalter als Triac ausgebildet ist. Im Motorbetrieb hingegen wird der Schalter vorzugsweise nicht angesteuert, so dass er im geöffneten Zustand vorliegt. In diesem Zustand ist ein normaler Betrieb bzw. ein normales Arbeiten mit der Werkzeugmaschine möglich, so dass der Zustand, in dem der Schalter der leitenden Verbindung geöffnet ist, als Betriebs-Zustand der Werkzeugmaschine bezeichnet wird. Es ist im Sinne der Erfindung bevorzugt, dass der Schalter im Betriebs-Modus nicht angesteuert wird, so dass sich der Triac wie ein geöffneter Schalter verhält.

In einer weiteren bevorzugten Ausgestaltung der Erfindung ist das mindestens eine elektronische Bauteil, das in der leitenden Verbindung zwischen den Akkus und dem Motor vorliegt, ein Gleichstrom-Gleichstrom-Wandler. Der Gleichstrom-Gleichstrom-Wandler wird im Sinne der Erfindung auch als DC-DC-Wandler bezeichnet. Es ist im Sinne der Erfindung besonders bevorzugt, dass die Werkzeugmaschine einen, zwei oder drei Gleichstrom-Gleichstrom-Wandler aufweist.

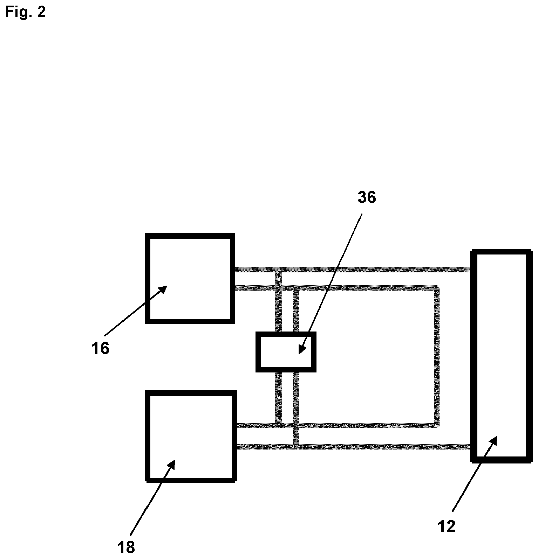

Wenn die Werkzeugmaschine einen Gleichstrom-Gleichstrom-Wandler aufweist, ist es im Sinne der Erfindung bevorzugt, dass der Gleichstrom-Gleichstrom-Wandler zwischen dem ersten Ackumulator und dem zweiten Akkumulator vorgesehen ist. Der zwischen den Akkus angeordnete Gleichstrom-Gleichstrom-Wandler wird im Sinne der Erfindung auch als dritter Gleichstrom-Gleichstrom-Wandler bezeichnet. In dieser Ausgestaltung der Erfindung kann ein Ladungsausgleich vorzugsweise vor dem Betätigen des Triggers der Werkzeugmaschine erfolgen. Somit werden die Ladungen zwischen den Akkumulatoren insbesondere vor der Inbetriebnahme der Werkzeugmaschine ausgeglichen. Dieser Betriebs-Modus der vorgeschlagenen Werkzeugmaschine kann vorzugsweise als Balancing-Modus bezeichnet werden. Es ist im Sinne der Erfindung bevorzugt, dass die Akkus nach dem Balancing, d.h. nach dem Ladungsausgleich im Wesentlichen gleiche Spannungswerte aufweisen. Diese Ausgestaltung der Erfindung ist in Fig. 2 dargestellt.

Es kann aber im Sinne der Erfindung auch bevorzugt sein, dass Akkumulatoren, deren Ladestände ausgeglichen werden sollen, unterschiedliche Nominalspannungen aufweisen. Beispielsweise können im Kontext der vorliegenden Erfindung Akkus mit Spannungen von 12 V und 36 V miteinander in einer Werkzeugmaschine vorliegen. Bei solchen Kombinationen von Akkumulatoren mit verschiedenen Ausgleichsspannungen kann angestrebt werden, dass die Akkus nach dem Ausgleichsvorgang gleiche oder im Wesentlichen gleich Ladezustände aufweisen. Es kann aber auch bevorzugt sein, dass sich die Ladestände lediglich angleichen. Das bedeutet mit anderen Worten, dass eine Differenz der Ladestände zwischen den Akkumulatoren verringert wird.

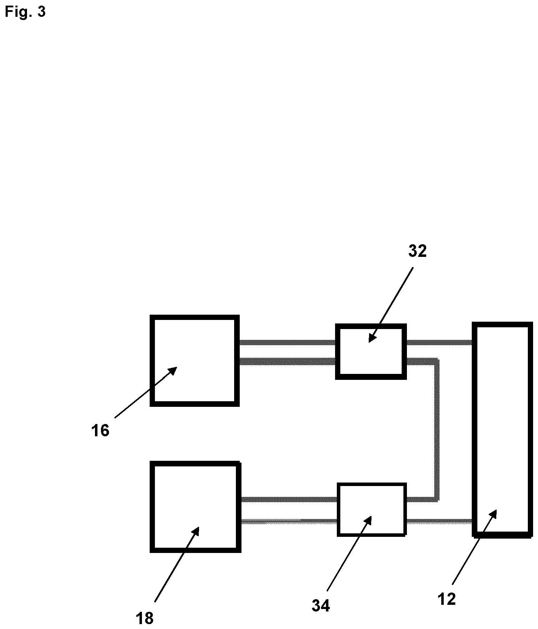

Es kann im Sinne der Erfindung auch bevorzugt sein, dass die Werkzeugmaschine zwei elektronische Bauteile aufweist, die als Gleichstrom-Gleichstrom-Wandler ausgebildet sind. Diese zwei Gleichstrom-Gleichstrom-Wandler werden als erster Gleichstrom-Gleichstrom-Wandler und als zweiter Gleichstrom-Gleichstrom-Wandler bezeichnet. Es ist im Sinne der Erfindung bevorzugt, dass der erste Gleichstrom-Gleichstrom-Wandler zwischen dem ersten Akkumulator und dem Motor der Werkzeugmaschine angeordnet ist, während der zweite Gleichstrom-Gleichstrom-Wandler zwischen dem zweiten Akkumulator und dem Motor der Werkzeugmaschine angeordnet ist. In dieser Ausgestaltung der Erfindung kann ein Ladungsausgleich vorzugsweise auch während einem Betätigen des Triggers der Werkzeugmaschine erfolgen. Somit können die Ladungen zwischen den Akkumulatoren insbesondere während des Betriebs der Werkzeugmaschine ausgeglichen werden. Dieser Betriebs-Modus der vorgeschlagenen Werkzeugmaschine kann vorzugsweise als Teil-Modus oder als Sharing-Modus bezeichnet werden. Ein besonderer Vorteil dieses Modus besteht darin, dass die Werkzeugmaschine direkt gestartet werden kann, ohne auf einen etwaigen Ladungsausgleich vor der Inbetriebnahme des Geräts warten zu müssen. Vorteilhafterweise kann die Werkzeugmaschine auch dann gestartet und betrieben werden, wenn die Akkus nicht denselben Ladestand aufweisen. Diese Ausgestaltung der Erfindung ist in Fig. 3 dargestellt.

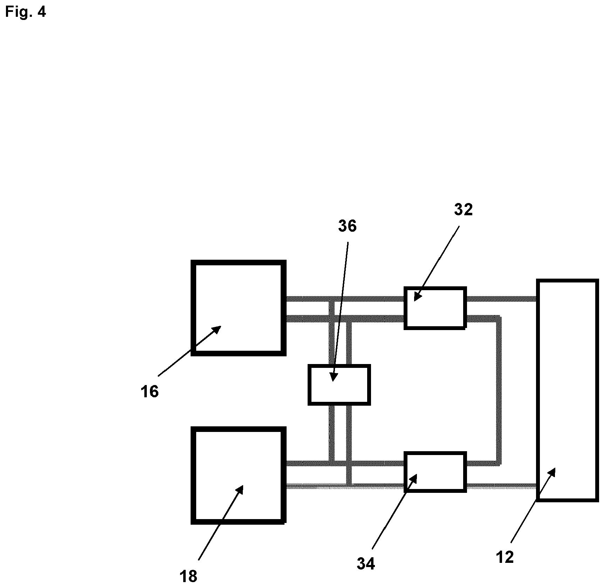

Daneben kann die Werkzeugmaschine auch drei elektronische Bauteile aufweist, die als Gleichstrom-Gleichstrom-Wandler ausgebildet sind. Dabei ist - wie zuvor - ein erster Gleichstrom-Gleichstrom-Wandler zwischen dem ersten Akkumulator und dem Motor der Werkzeugmaschine angeordnet, während der zweite Gleichstrom-Gleichstrom-Wandler zwischen dem zweiten Ackumulator und dem Motor der Werkzeugmaschine angeordnet ist. Der dritte Gleichstrom-Gleichstrom-Wandler liegt vorzugsweise zwischen dem ersten Akkumulator und dem zweiten Akkumulator angeordnet vor. In dieser Ausgestaltung der Erfindung kann ein Ladungsausgleich sowohl vor, als auch während dem Betätigen des Triggers der Werkzeugmaschine erfolgen. Damit können die Ladungen zwischen den Akkumulatoren insbesondere vor und während des Betriebs der Werkzeugmaschine ausgeglichen werden. Dieser Betriebs-Modus der vorgeschlagenen Werkzeugmaschine kann vorzugsweise als Hybrid-Modus bezeichnet werden. Diese Ausgestaltung der Erfindung ist in Fig. 4 dargestellt.

Es ist im Sinne der Erfindung bevorzugt, dass die Akkumulatoren innerhalb der Werkzeugmaschine in Reihe oder parallel geschaltet vorliegen können. Dabei ist allerdings eine Reihenschaltung der Akkus besonders bevorzugt, um die bereitzustellende Leistung bei gleichbleibenden Strömen zu verdoppeln. Außerdem wird bei einer Reihenschaltung ein unkontrollierter Ladungsausgleich zwischen den Akkumulatoren vermieden. Ein solcher unerwünschter, unkontrollierter Ladungsausgleich kann dann vorkommen, wenn unterschiedliche Anfangs-Spannungen der Akkumulatoren vorliegen.

Es ist im Sinne der Erfindung bevorzugt, dass mit der Erfindung eine Leistung für die Werkzeugmaschine in einem Bereich von 2,0 bis 2,8 kW bereitgestellt werden kann. Es ist im Sinne der Erfindung bevorzugt, dass die mit der Erfindung bereitzustellende Leistung der Summe der Einzelleistungen der beiden Akkus entspricht. Vorteilhafterweise stellt die Erfindung einen Leistungsumwandlungspfad für eine Werkzeugmaschine dar, mit dem Leistungen bzw. Ladungen zwischen den einzelnen Akkus und/oder der Last, d.h. dem Verbraucher im System, ausgetauscht werden können.

Durch die Erfindung kann die gesamte in den Akkus gespeicherte Energie umgesetzt und für den Betrieb der Werkzeugmaschine genutzt werden. Dadurch wird insbesondere die Laufzeit der Werkzeugmaschine verlängert.

In den Ausgestaltungen der Erfindung, in denen das mindestens eine elektronische Bauteil, das in der leitenden Verbindung zwischen den Akkus und dem Motor vorliegt, von einem Gleichstrom-Gleichstrom-Wandler gebildet wird, kann es im Sinne der Erfindung auch bevorzugt sein, dass die vorgeschlagene Werkzeugmaschine mehr als zwei Akkumulatoren aufweist. Die vorgeschlagenen Schaltungen können entsprechend an eine Werkzeugmaschine mit mehr als zwei Akkumulatoren abgepasst werden. Dies kann beispielsweise dadurch erreicht werden, dass eine Anzahl der Gleichstrom-Gleichstrom-Wandler an die Anzahl der Akkumulatoren angepasst wird.

In einem zweiten Aspekt betrifft die Erfindung ein Verfahren zum Ladungsausgleich zwischen einem ersten Akkumulator und einem zweiten Akkumulator in einer Werkzeugmaschine, wobei die Werkzeugmaschine einen Motor mit mindestens einer Motorphase aufweist, wobei zur Durchführung des Ladungsausgleichs zwischen den Akkumulatoren eine leitende Verbindung zwischen den Akkumulatoren und der mindestens einen Phase des Motors der Werkzeugmaschine hergestellt wird. Dies kann beispielsweise dadurch erfolgen, dass ein Schalter in der leitenden Verbindung geschlossen wird. Die für die vorgeschlagene Werkzeugmaschine beschriebenen Definitionen, technischen Wirkungen und Vorteile gelten für das vorgeschlagene Balancing- oder Ladungsausgleichsverfahren analog. In einer bevorzugten Ausgestaltung der Erfindung kann der Motor der vorgeschlagenen Werkzeugmaschine beispielsweise drei Motorphasen aufweisen; es sind aber vorzugweise auch mehr Motorphasen denkbar oder eine Ausgestaltung mit einer Motorphase und einer H-Brücke mit Invertern.

Es ist im Sinne der Erfindung bevorzugt, dass der Schalter in einem Betriebs-Modus der Werkzeugmaschine geöffnet wird, so dass keine leitende Verbindung zwischen dem Mittelabgriff und der mindestens einen Phase des Motors der Werkzeugmaschine besteht.

Weitere Vorteile ergeben sich aus der folgenden Figurenbeschreibung. In der Figur ist ein Ausführungsbeispiel der vorliegenden Erfindung dargestellt. Die Figur, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In der Figur sind gleiche und gleichartige Komponenten mit gleichen Bezugszeichen beziffert.

Es zeigt:
- Fig. 1: Ausführungsbeispiel der vorgeschlagenen Motoransteuerung
- Fig. 2: Ausführungsbeispiel der Erfindung mit einem Gleichstrom-Gleichstrom-Wandler
- Fig. 3: Ausführungsbeispiel der Erfindung mit zwei Gleichstrom-Gleichstrom-Wandlern
- Fig. 4: Ausführungsbeispiel der Erfindung mit drei Gleichstrom-Gleichstrom-Wandlern
- Fig. 5: Ausführungsbeispiel der vorgeschlagenen Motoransteuerung
- Fig. 6: Ausführungsbeispiel der Erfindung mit drei Akkus

### Ausführungsbeispiele und Figurenbeschreibung:

Fig. 1 zeigt eine beispielhafte Ausgestaltung der vorgeschlagenen Motoransteuerung. Eine Werkzeugmaschine 10 wird in Fig. 1 nicht dargestellt. Zu sehen sind in Fig. 1 die Akkumulatoren 16, 18, die über einen Mittelabgriff 20 miteinander verbunden vorliegen können. Der Begriff «Mittelabgriff» ist im Sinne der Erfindung bevorzugt als Verbindungsstück zwischen den Akkumulatoren 16, 18 zu verstehen und insbesondere als elektrisch leitende Verbindung zwischen einem Minuspol des ersten Akkumulators 16 und einem Pluspol des zweiten Akkumulators 18.

Die geschwungene Linie in Fig. 1 stellt die leitende Verbindung 22 zwischen den Akkumulatoren 16, 18 und den Motorphasen 14a, 14b, 14c des Motors 12 der Werkzeugmaschine 10 dar. Vorzugsweise besteht die leitende Verbindung 22 insbesondere zwischen dem Mittelabgriff 20, der bevorzugt zwischen den Akkumulatoren 16, 18 angeordnet ist, und den Motorphasen 14a, 14b, 14c des Motors 12 der Werkzeugmaschine 10. Es ist im Sinne der Erfindung bevorzugt, dass die Akkumulatoren 16, 18 mit einer der Motorphasen 14a, 14b, 14c verbunden vorliegen. Die elektrisch leitende Verbindung 22 kann aber auch zwischen den Akkumulatoren 16, 18 und mehreren Motorphasen 14a, 14b, 14c bestehen. Mit anderen Worten können die Akkumulatoren 16, 18 mit einer, zwei oder allen drei Motorphasen 14a, 14b, 14c verbunden vorliegen, wobei die Anbindung durch die elektrisch leitende Verbindung 22 erfolgt. Die elektrisch leitende Verbindung 22 kann insbesondere als Leiterbahn ausgebildet sein.

In der elektrisch leitenden Verbindung 22 ist ein Schalter 24 vorgesehen, der insbesondere als Triac ausgebildet sein kann. Der Schalter 24 kann aber auch von einem Relais, FETs, IGBTs oder einem mechanischen Schalter gebildet werden, wobei der mechanische Schalter vorzugsweise geschlossen ist und somit auf «Balancing-Modus» steht.

Es ist im Sinne der Erfindung bevorzugt, dass der Schalter 24 während der Balancing- oder Ausgleichsphase durch schnelles Anpulsen im geschlossenen Zustand verbleiben kann, wenn der Schalter 24 als Triac ausgebildet ist Im normalen Motorbetrieb der Werkzeugmaschine 10, der im Sinne der Erfindung als «Betriebs-Modus» bezeichnet wird, wird der Schalter 24 vorzugsweise nicht angesteuert, so dass er sich vorteilhafterweise wie ein geöffneter Schalter verhält.

Zwischen dem Schalter 24 und dem Motor 12 liegt ein Bereich der leitenden Verbindung 22 vor, die vorzugsweise von einer «reused motor coil» gebildet wird. Dieser Abschnitt stellt eine Phase 14 des Motors 12 der Werkzeugmaschine 10 dar, die im Fall des Balancings als Induktivität benutzt wird, um die Funktion eines DC-DC-Wandlers zu erfüllen bzw. zu realisieren. Es ist im Sinne der Erfindung bevorzugt, dass eine oder mehrere der Motorphasen 14a, b, c als Induktivitäten verwendet werden. Vorzugsweise wird im Kontext der Erfindung ein Inverter zur Durchführung des Ladungsausgleichs zwischen den Akkumulatoren 16, 18 verwendet. Darüber hinaus ist es im Sinne der Erfindung bevorzugt, dass die Motorinduktivität die DC-DC-Induktivität im Ausgleichs-Fall bildet. Mit anderen Worten wird im Kontext der vorliegenden Erfindung der Motor 12 der vorgeschlagenen Werkzeugmaschine 10 als Induktivität verwendet.

Der Motor 12 umfasst in dem in Fig. 1 dargestellten Ausführungsbeispiel der Erfindung drei Motorphasen 14a, 14b, 14c. Es ist jedoch auch ein einphasiger Motor mit Brückenschaltung denkbar, ein zweiphasiger Motor oder ein Motor mit mehr als drei Motorphasen.

Fig. 2 zeigt eine Ausgestaltung der Erfindung mit einem Gleichstrom-Gleichstrom-Wandler 36 als elektronischem Bauteil 30. Der in Fig. 2 dargestellte Gleichstrom-Gleichstrom-Wandler 36 liegt zwischen dem ersten Akku 16 und dem zweiten Akku 18 angeordnet vor. In dieser Ausgestaltung kann die Werkzeugmaschine 10 im Balancing-Modus betrieben werden.

Fig. 3 zeigt eine Ausgestaltung der Erfindung mit zwei Gleichstrom-Gleichstrom-Wandlern 32, 34. Der erste Gleichstrom-Gleichstrom-Wandler 32 liegt zwischen dem ersten Akku 16 und dem Motor 12 der Werkzeugmaschine 10 angeordnet vor, während der zweite Gleichstrom-Gleichstrom-Wandler 34 zwischen dem zweiten Akku 18 und dem Motor 12 der Werkzeugmaschine 10 angeordnet vorliegt. In dieser Ausgestaltung der Erfindung kann die Werkzeugmaschine 10 im Teil-Modus betrieben werden.

Fig. 4 zeigt eine Ausgestaltung der Erfindung mit drei Gleichstrom-Gleichstrom-Wandlern 32, 34, 36. Der erste Gleichstrom-Gleichstrom-Wandler 32 liegt zwischen dem ersten Akku 16 und dem Motor 12 der Werkzeugmaschine 10 angeordnet vor, während der zweite Gleichstrom-Gleichstrom-Wandler 34 zwischen dem zweiten Akku 18 und dem Motor 12 der Werkzeugmaschine 10 angeordnet vorliegt und der dritte Gleichstrom-Gleichstrom-Wandler 36 zwischen den Akkumulatoren 16, 18 vorliegt. In dieser Ausgestaltung der Erfindung kann die Werkzeugmaschine 10 im Hybrid-Modus betrieben werden.

Die in den Fig. 2-4 dargestellten Ausführungsformen der Erfindung können auch auf Werkzeugmaschinen mit mehr als zwei Akkumulatoren erweitert bzw. skaliert werden. Die Zahl der Gleichstrom-Gleichstrom-Wandler kann dann entsprechend angepasst werden.

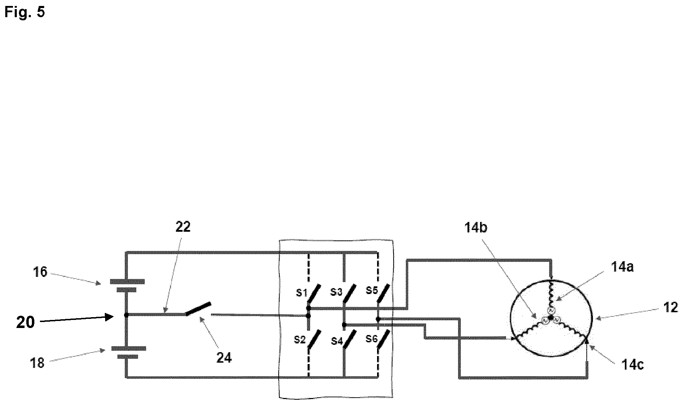

Fig. 5 zeigt ein weiteres Ausführungsbeispiel der Erfindung. Dargestellt sind die zwei Akkumulatoren 16, 18, die über einen Mittelabgriff 20 miteinander verbunden sind. Auf der rechten Seite von Fig. 5 ist der Motor 12 der Werkzeugmaschine 10 mit drei Motorphasen 14a, 14b, 14c abgebildet. Zwischen dem Mittelabgriff 22 und dem Motor 12 befindet sich eine elektrischen Leitung 22, die ein elektronisches Bauteil 24, beispielsweise einen Schalter, umfasst. In der elektrischen Leitung 22 kann darüber hinaus ein Bauteil mit verschiedenen Motorinverter-Schaltern S1 bis S6 angeordnet sein. Das Bauteil stellt vorzugsweise einen Motorinverter dar. Während der Durchführung eines Ladungsausgleichs zwischen den Akkumulatoren 16, 18 sind die Motorinverter-Schalter S1, S2, S5 und S6 unbenutzt, weswegen die elektrischen Leitungen, die auf sie zuführen, in gestrichelten Linien dargestellt sind. Die Motorinverter-Schalter S3 und S4 sind mit durchgezogenen Linien dargestellt. Durch geeignetes Schalten dieser Motorinverter-Schalter S3 und S4 beim Ladungsausgleich kann der Strom vom ersten Akku 16 in den zweiten Akku 18 «gepumpt» werden, oder umgekehrt. Es ist im Sinne der Erfindung bevorzugt, dass der Schalter 24 während des Ladungsausgleichs geschlossen ist. In dem in Fig. 5 dargestellten Ausführungsbeispiel der Erfindung ist die Motorphase 14c ungenutzt, da die Motorphase 14c mit den geöffneten Motorinverter-Schaltern S5 und S6 verbunden vorliegt. Die Motorphase 14a ist in diesem Ausführungsbeispiel der Erfindung durch den Schalter 24 mit dem Mittelabgriff 20 zwischen den Akkumulatoren 16, 18 verbunden, während die Motorphase 14b mit derjenigen Inverter-Halbbrücke verbunden vorliegt, die von den Motorinverter-Schaltern S3 und S4 gebildet wird. Der Motorinverter weist vorzugsweise sechs Motorinverter-Schalter S1 bis S6 auf, wobei bei einem einphasigen Motor 12 eine H-Brücke mit vier Motorinverter-Schaltern verwendet wird und bei höher-phasigen Motoren 12 dementsprechend eine größere Anzahl von Motorinverter-Schaltern.

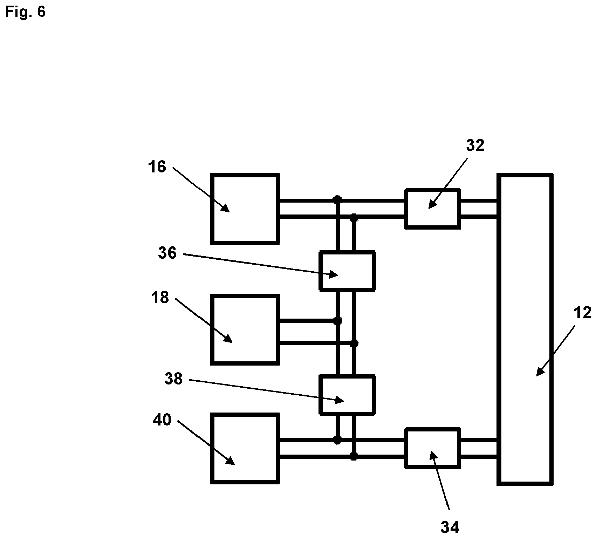

Fig. 6 zeigt ein Ausführungsbeispiel der Erfindung mit drei Akkus 16, 18, 40. Zwischen den Ackumulatoren 16, 18, 40 ist jeweils ein Gleichstrom-Gleichstrom-Wandler 36, 38 vorgesehen, wobei auch jeweils in Richtung des Motors 12 der Werkzeugmaschine 10 ein weiterer Gleichstrom-Gleichstrom-Wandler 32, 34 vorgesehen ist. Der erste Gleichstrom-Gleichstrom-Wandler 32 liegt zwischen dem ersten Akku 16 und dem Motor 12 der Werkzeugmaschine 10 angeordnet vor, während der zweite Gleichstrom-Gleichstrom-Wandler 34 zwischen dem dritten Akku 40 und dem Motor 12 der Werkzeugmaschine 10 angeordnet vorliegt. Der dritte Gleichstrom-Gleichstrom-Wandler 36 ist vorzugsweise zwischen dem ersten Akkumulator 16 und dem zweiten Akkumulator 18 vorgesehen, während der vierte Gleichstrom-Gleichstrom-Wandler 38 zwischen dem zweiten Akkumulator 18 und dem dritten Akkumulator 40 vorgesehen ist.

### Bezugszeichenliste

- 10: Werkzeugmaschine
- 12: Motor der Werkzeugmaschine
- 14a: Phase des Motors der Werkzeugmaschine
- 14b: Phase des Motors der Werkzeugmaschine
- 14c: Phase des Motors der Werkzeugmaschine
- 16: erster Akkumulator
- 18: zweiter Akkumulator
- 20: Mittelabgriff
- 22: leitende Verbindung
- 24: Schalter
- 30: elektronisches Bauteil
- 32: erster Gleichstrom-Gleichstrom-Wandler
- 34: zweiter Gleichstrom-Gleichstrom-Wandler
- 36: dritter Gleichstrom-Gleichstrom-Wandler
- 38: vierter Gleichstrom-Gleichstrom-Wandler
- 40: dritter Akkumulator

## Patentansprüche

1. Werkzeugmaschine (10) umfassend einen Motor (12) mit mindestens einer Motorphase (14a, 14b, 14c) sowie mindestens einen ersten Akkumulator (16) und einen zweiten Akkumulator (18),
**gekennzeichnet dadurch, dass**
zum Ladungsausgleich zwischen dem ersten Akkumulator (16) und dem zwei Akkumulator (18) eine leitende Verbindung (22) zwischen den Akkumulatoren (16, 18) und der mindestens einen Phase (14a, 14b, 14c) des Motors (12) der Werkzeugmaschine (10) vorgesehen ist, wobei die leitende Verbindung (22) mindestens ein elektronisches Bauteil (30) aufweist.

2. Werkzeugmaschine (10) nach Anspruch 1
**gekennzeichnet dadurch, dass**
das elektronische Bauteil (30) ein Schalter (24) ist, der in einem Ausgleichs-Modus der Werkzeugmaschine (10) geschlossen und in einem Betriebs-Modus der Werkzeugmaschine (10) geöffnet werden kann.

3. Werkzeugmaschine (10) nach Anspruch 1 oder 2
**gekennzeichnet dadurch, dass**
die Akkumulatoren (16, 18) über einen Mittelabgriff (20) miteinander verbunden vorliegen, wobei die leitende Verbindung (22) zwischen dem Mittelabgriff (20) und der mindestens einen Motorphase (14a, 14b, 14c) besteht.

4. Werkzeugmaschine (10) nach einem der vorhergehenden Ansprüche
**gekennzeichnet dadurch, dass**
der erste Akkumulator (16) einen ersten Ladestand aufweist und der zweite Akkumulator (18) einen zweiten Ladestand aufweist, wobei die Ladestände mittels dem Ladungsausgleich ausgeglichen werden.

5. Werkzeugmaschine (10) nach einem der vorhergehenden Ansprüche
**gekennzeichnet dadurch, dass**
der Motor (12) der Werkzeugmaschine (10) ein bürstenloser Motor ist.

6. Werkzeugmaschine (10) nach einer der Ansprüche 2 bis 5
**gekennzeichnet dadurch, dass**
der Schalter (24) als Triac ausgebildet ist.

7. Werkzeugmaschine (10) nach Anspruch 1
**gekennzeichnet dadurch, dass**
das mindestens eine elektronische Bauteil (30) ein Gleichstrom-Gleichstrom-Wandler ist.

8. Werkzeugmaschine (10) nach Anspruch 7
**gekennzeichnet dadurch, dass**
ein Gleichstrom-Gleichstrom-Wandler (36) zwischen dem ersten Akkumulator (16) und dem zweiten Akkumulator (18) vorgesehen ist.

9. Werkzeugmaschine (10) nach Anspruch 7
**gekennzeichnet dadurch, dass**
die Werkzeugmaschine (10) zwei elektronische Bauteile (30) aufweist, die als Gleichstrom-Gleichstrom-Wandler ausgebildet sind, wobei ein erster Gleichstrom-Gleichstrom-Wandler (32) zwischen dem ersten Akkumulator (16) und dem Motor (12) der Werkzeugmaschine (10) angeordnet ist und der zweite Gleichstrom-Gleichstrom-Wandler (34) zwischen dem zweiten Akkumulator (18) und dem Motor (12) der Werkzeugmaschine (10) angeordnet ist.

10. Werkzeugmaschine (10) nach Anspruch 7
**gekennzeichnet dadurch, dass**
die Werkzeugmaschine (10) drei elektronische Bauteile (30) aufweist, die als Gleichstrom-Gleichstrom-Wandler ausgebildet sind, wobei ein erster Gleichstrom-Gleichstrom-Wandler (32) zwischen dem ersten Akkumulator (16) und dem Motor (12) der Werkzeugmaschine (10) angeordnet ist, der zweite Gleichstrom-Gleichstrom-Wandler (34) zwischen dem zweiten Akkumulator (18) und dem Motor (12) der Werkzeugmaschine (10) angeordnet ist und der dritte Gleichstrom-Gleichstrom-Wandler (36) zwischen dem ersten Akkumulator (16) und dem zweiten Akkumulator (18) vorgesehen ist.

11. Verfahren zum Ladungsausgleich zwischen einem ersten Akkumulator (16) und einem zwei Akkumulator (18) in einer Werkzeugmaschine (10), wobei die Werkzeugmaschine (10) einen Motor (12) mit mindestens einer Motorphase (14a, 14b, 14c) aufweist,
**gekennzeichnet dadurch, dass**
zur Durchführung des Ladungsausgleichs zwischen dem ersten Akkumulator (16) und dem zwei Akkumulator (18) eine leitende Verbindung (22) zwischen den Akkumulatoren (16, 18) und der mindestens einen Phase (14a, 14b, 14c) des Motors (12) der Werkzeugmaschine (10) hergestellt wird.

12. Verfahren nach Anspruch 11
**gekennzeichnet dadurch, dass**
in der leitenden Verbindung (22) ein Schalter (24) vorgesehen ist, der geschlossen werden kann, um eine leitende Verbindung (22) zwischen den Akkumulatoren (16, 18) und der mindestens einen Phase (14a, 14b, 14c) des Motors (12) der Werkzeugmaschine (10) herzustellen.

13. Verfahren nach Anspruch 12
**gekennzeichnet dadurch, dass**
der Schalter (24) in einem Betriebs-Modus der Werkzeugmaschine (10) geöffnet wird, so dass keine leitende Verbindung (22) zwischen dem Mittelabgriff (20) und der mindestens einen Phase (14a, 14b, 14c) des Motors (12) der Werkzeugmaschine (10) besteht.

14. Verfahren nach Anspruch 12
**gekennzeichnet dadurch, dass**
der Schalter (24) im Ausgleichs-Modus durch eine Pulsweitenmodulation (PWM) in einem geschlossenen Zustand gehalten wird.

15. Verfahren nach einem der Ansprüche 12 bis 14
**gekennzeichnet dadurch, dass**
der Schalter (24) im Betriebs-Modus nicht angesteuert wird.
